# EUROPEAN PATENT SPECIFICATION

(11) **EP 2 799 752 B1**
(45) Date of publication and mention of the grant of the patent: **19.10.2016**
(21) Application number: 14165937.5
(22) Date of filing: 25.04.2014
(51) Int. Cl.: F16L 39/06

(54) **Multi-port rotary joint**
Multiportdrehverbindung
Joint rotatif à orifices multiples

(30) Priority: 01.05.2013 JP 2013096507
(43) Date of publication of application: 05.11.2014
(73) Proprietor: NIPPON PILLAR PACKING CO., LTD., Osaka-shi, Osaka 532-0022 (JP)
(72) Inventor: Fukumoto, Takato, Osaka, 532-0022 (JP); Yamanoi, Takeshi, Osaka, 532-0022 (JP); Kikuyama, Yoshinori, Osaka, 532-0022 (JP)
(74) Representative: De Clercq, Ann G. Y.

(56) References cited:
- GB-A- 2 306 672
- JP-A- 2001 141 150
- JP-A- 2006 161 954

## Description

### TECHNICAL FIELD

The present invention relates to a multi-port rotary joint used for connecting a plurality of flow passages in a fixing portion to a plurality of flow passages in a rotary portion.

### BACKGROUND ART

For example, in surface polishing treatment of a semiconductor wafer with a CMP apparatus (Chemical Mechanical Polishing apparatus), a polishing solution, air for pressurization, washing water (pure water), air for air blow, air for vacuum suction of the semiconductor wafer, a fluid for suction and discharge of a polishing residue liquid, and the like are caused to flow between a rotary member (a turntable or a top ring) and a fixing member (a CMP apparatus main body) supporting the rotary member.

Thus, a joint portion that connects the rotary member to the fixing member requires a plurality of independent fluid passages, and, for example, multi-port rotary joints disclosed in Japanese Laid-Open Patent Publication No. 2006-161954 (see FIG. 1 thereof) or JP2001141150 are used as such a joint portion.

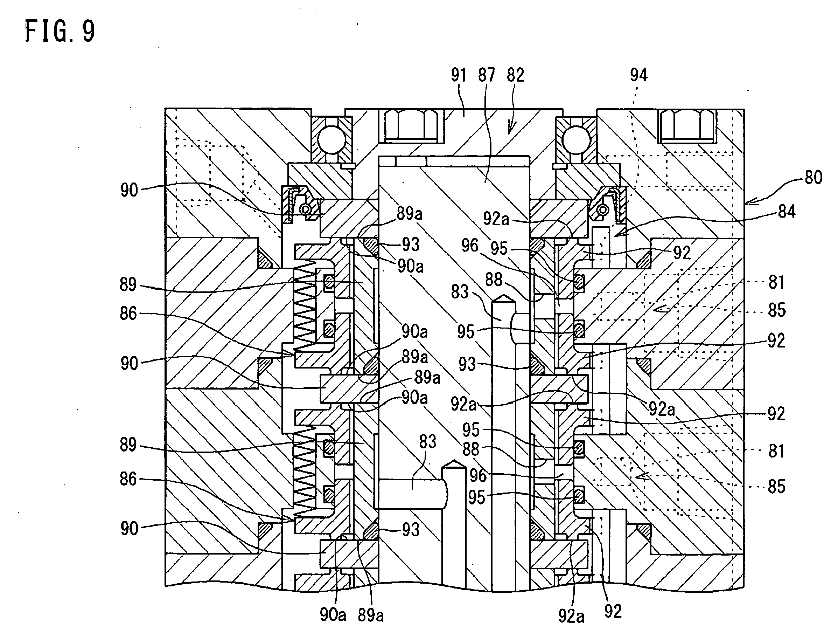

FIG. 9 is a cross-sectional view of a portion of a multi-port rotary joint. The multi-port rotary joint includes a case body 80 formed by combining a plurality of tubular block bodies; a shaft body 82 provided rotatably within the case body 80; and a plurality of mechanical seals 86 (including first sealing rings 90 and second sealing rings 92) provided along the shaft body 82 in a space 84 between the case body 80 and the shaft body 82. A plurality of independent fluid passages 85 are provided in the multi-port rotary joint.

The shaft body 82 includes a shaft main body 87 and sleeves 89 fitted on the shaft main body 87. The sleeves 89 are arranged along an axial direction alternately with the first sealing rings 90 which are movable components of the mechanical seals 86, and the sleeves 89 and the first sealing rings 90 are pressed in the axial direction by a pressing member 91.

End faces 89a of the sleeves 89 adjacent to each first sealing ring 90 contact with respective annular side faces 90a of the first sealing ring 90, and the sleeves 89 serve as spacers between the first sealing rings 90, 90. By the pressing force of the pressing member 91, the end faces 89a of the sleeves 89 are pressed against the annular side faces 90a of the first sealing rings 90, so that all the sleeves 89 and first sealing rings 90 are rotatable with the shaft main body 87 due to frictional forces therebetween.

In the case body 80, a plurality of first flow passages 81 are formed so as to be opened at the outer peripheral side and the inner peripheral side thereof. In the shaft body 82 which includes the shaft main body 87 and the sleeves 89, a plurality of second flow passages 83 are formed so as to be opened at the outer peripheral side thereof. It should be noted that through holes 88 are formed in the sleeves 89, and the through holes 88 are opening holes of the second flow passages 83 at the outer peripheral side. O-rings 93 are provided between the shaft main body 87, the sleeves 89, and the first sealing rings 90, thereby preventing a fluid flowing through each second flow passage 83 from entering another flow passage or leaking to the outside.

One first flow passage 81 and one second flow passage 83 are opened at the same position in the axial direction and form one fluid passage 85. Thus, in the space 84, the second sealing rings 92, 92 which are stationary components of the mechanical seal 86 are provided at the radially outer side of each sleeve 89 and between the adjacent first sealing rings 90, 90, and an annular flow passage 96 is formed between these second sealing rings 92, 92 so as to connect the second flow passage 83 (the through hole 88) to the first flow passage 81. These second sealing rings 92, 92 have annular seal surfaces 92a, 92a that contact with the annular side faces 90a, 90a of the first sealing rings 90, 90 located at both sides of the second sealing rings 92, 92 in the axial direction, thereby preventing a fluid from leaking from between the annular side faces 90a and the seal surfaces 92a. In addition, O-rings 95 are provided between the outer peripheral side of the second sealing rings 92, 92 and the case body 80, thereby preventing a fluid from leaking from therebetween (the annular flow passage 96).

Due to the above configuration, the shaft main body 87, the sleeves 89, and the first sealing rings 90 are rotatable together relative to the case body 80. In addition, the seal surfaces 92a of a plurality of the second sealing rings 92 aligned in the axial direction slidably contact with the annular side faces 90a of the rotating first sealing rings 90, so that the function as the mechanical seals 86 is exerted, whereby it is possible to form the plurality of independent fluid passages 85.

### SUMMARY OF INVENTION

### [TECHNICAL PROBLEM]

When the multi-port rotary joint having the above-described configuration is used over a long period of time, the annular side faces 90a and the seal surfaces 92a are polished due to sliding contact between the first sealing rings 90 and the second sealing rings 92, and the surface accuracy (e.g., flatness) of these annular side faces 90a and seal surfaces 92a are increased in time.

In this case, the annular side faces 90a and the seal surfaces 92a adhere by suction to each other, so that a fluid that can contribute to lubrication cannot enter between the annular side faces 90a and the seal surfaces 92a and a lubricating film is unlikely to be formed therebetween. Thus, sliding friction (sliding torque) between the first sealing rings 90 and the second sealing rings 92 may be increased more than expected.

In this case, rotation of each second sealing ring 92 is prevented at a portion of the case body 80, for example, by engaging a drive pin with a claw portion (recess portion) 94 or the like. When the sliding friction between the first sealing ring 90 and the second sealing ring 92 is increased such that the second sealing ring 92 attempts to rotate with the first sealing ring 90, there is the concern that the claw portion 94 or the like for rotation prevention is broken. In addition, in contrast, when rotation of the first sealing ring 90 is suppressed by the second sealing ring 92, there is the concern that the first sealing ring 90 and the sleeve 89 slide relative to each other to wear the end face 89a of the sleeve 89, and there is also the concern that the second sealing ring 92 and the O-ring 93 slide relative to each other to damage the O-ring 93.

Therefore, it is an object of the present invention to provide a multi-port rotary joint that allows for reduction in sliding friction between a first sealing ring and a second sealing ring.

### [SOLUTION TO PROBLEM]

A multi-port rotary joint according to the present invention includes: a tubular case body having a plurality of first-flow passages formed therein so as to be opened at an inner peripheral side thereof; a shaft body provided within the case body so as to be rotatable relative to the case body and having a plurality of second flow passages formed therein so as to be opened at an outer peripheral side thereof; and a plurality of mechanical seals provided in a space between the case body and the shaft body and along the shaft body. The shaft body includes a shaft main body and a plurality of sleeves fitted on the shaft main body and each having a plurality of through holes formed therein so as to be spaced apart from each other at equal intervals in a circumferential direction. Each mechanical seal includes first sealing rings fitted on the shaft main body alternately with the sleeves and having annular side faces that contact with end faces of the sleeves, and second sealing rings provided at a radially outer side of the sleeve and between the first sealing rings adjacent to each other across the sleeve and having annular seal surfaces that contact with the annular side faces of the respective first sealing rings. The sleeves and the first sealing rings are configured to be rotatable with the shaft main body by being pressed in an axial direction. The sleeves at both sides of the first sealing ring in the axial direction are located such that a position of each through hole of the sleeve at one side among the sleeves at both sides of the first sealing ring in the axial direction and a middle position in the circumferential direction between the through holes adjacent to each other in the circumferential direction in the sleeve at another side thereamong coincide with each other in the circumferential direction.

According to the present invention, since the plurality of through holes are formed in each sleeve so as to be spaced apart from each other at equal intervals in the circumferential direction, the rigidity of each sleeve with respect to a force in the axial direction varies along the circumferential direction. In other words, the rigidity is relatively low at the position in the circumferential direction at which each through hole is formed, and the rigidity is relatively high at the middle position in the circumferential direction between the through holes adjacent to each other in the circumferential direction. Thus, when the sleeves are pressed against the first sealing rings in the axial direction in order to make the sleeves and the first sealing rings rotatable with the shaft main body, a contact pressure applied to each annular side face of each first sealing ring periodically varies.

Therefore, when the sleeves at both sides of the first sealing ring in the axial direction are located such that the position of each through hole of the sleeve at one side among these sleeves and the middle position in the circumferential direction between the through holes adjacent to each other in the circumferential direction in the sleeve at the other side thereamong coincide with each other in the circumferential direction, the position in the circumferential direction at which the contact pressure applied to the annular side face at the one side of the first sealing ring becomes minimum coincides with the position in the circumferential direction at which the contact pressure applied to the annular side face at the other side of the first sealing ring becomes maximum, and the first sealing ring becomes slightly deformed (distorted) so as to wave along the circumferential direction. Thus, minute gaps occur between the annular side faces of the first sealing ring and the seal surfaces of the second sealing rings, a fluid that can contribute to lubrication enters each gap to form a lubricating film, whereby it is possible to reduce sliding friction between the first sealing ring and the second sealing rings.

In addition, each of the plurality of sleeves is preferably provided such that a position of each through hole thereof in the circumferential direction coincides with that of another sleeve away therefrom across one sleeve.

Thus, all the sleeves are allowed to be located such that the position of each through hole of the sleeve at one side among the sleeves at both sides of the first sealing ring in the axial direction and the middle position in the circumferential direction between the through holes adjacent to each other in the circumferential direction in the sleeve at the other side coincide with each other in the circumferential direction.

### [ADVANTAGEOUS EFFECTS OF INVENTION]

According to the present invention, each first sealing ring becomes slightly deformed (distorted) so as to wave along the circumferential direction. Thus, minute gaps occur between the annular side faces of the first sealing ring and the seal surfaces of the second sealing rings, a fluid that can contribute to lubrication enters each gap to form a lubricating film, whereby it is possible to reduce sliding friction between the first sealing ring and the second sealing rings.

### BRIEF DESCRIPTION OF DRAWINGS

FIG. 1 is a longitudinal cross-sectional view showing an example of a multi-port rotary joint according to the present invention.
FIGS. 2A and 2B are explanatory diagrams of a sleeve fitted on a shaft main body, FIG. 2A is a view as seen from an axial direction (the front), and FIG. 2B is a cross-sectional view as seen from the side.
FIG. 3 is a cross-sectional view of a portion of the joint shown in FIG. 1.
FIG. 4 is an explanatory diagram of a state where sleeves and first sealing rings provided alternately on the shaft main body are taken out.
FIG. 5 is an explanatory diagram of the first sealing ring and the sleeves at both sides thereof in the axial direction.
FIG. 6 is an explanatory diagram showing a modification of the sleeve.
FIGS. 7A and 7B are explanatory diagrams illustrating a conventional example, FIG. 7A shows the case where the positions of respective through holes of all sleeves in a circumferential direction are the same, and FIG. 7B shows the case where the positions of the through holes of sleeves in the circumferential direction have no regularity and are random.
FIG. 8 is an explanatory diagram of a first sealing ring in the case of FIG. 7A and the sleeves at both sides thereof in an axial direction.
FIG. 9 is a cross-sectional view of a portion of a multi-port rotary joint (a conventional example).

### DESCRIPTION OF EMBODIMENTS

Hereinafter, embodiments of the present invention will be described.

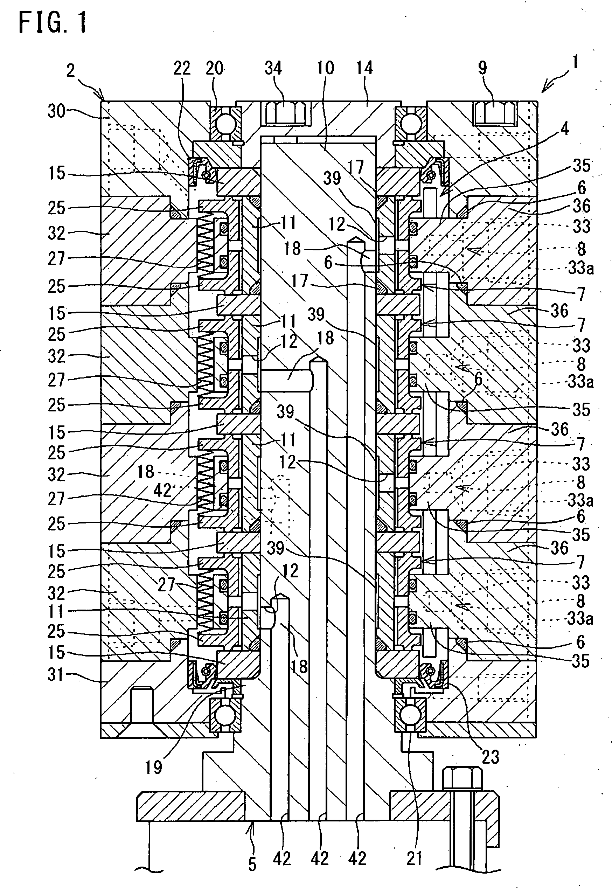

FIG. 1 is a longitudinal cross-sectional view of an example of a multi-port rotary joint 1 according to the present invention. The multi-port rotary joint 1 (hereinafter, also referred to,as joint 1) includes a case body 2 attached to a fixing member (e.g. a CMP apparatus main body) of a rotary apparatus; and a shaft body 5 attached to a rotary member of the rotary apparatus (e.g. a top ring or a turntable of a CMP apparatus). It should be noted that the attitude of the joint 1 may be an attitude other than the attitude shown in FIG. 1. In the present embodiment, the upper side in FIG. 1 is defined as an "upper side" of the joint 1 and the lower side in FIG. 1 is defined as a "lower side" of the joint 1.

In the joint 1, N (N is an integer not less than 2 and is 4 in the illustrated example) fluid passages 8 are formed. Each fluid passage 8 is formed by connecting one first flow passage 33 formed in the case body 2 to one second flow passage 18 formed in the shaft body 5. One fluid passage 8 is provided independently of the other fluid passages 8, and N mechanical seals 7 described later are provided along the shaft body 5 so as to prevent a fluid flowing through each fluid passage 8 from being mixed with a fluid flowing through another fluid passage 8.

The case body 2 includes upper and lower end flanges 30, 31 and N flow passage flanges 32 provided between these end flanges 30, 31. These flanges 30, 31, and 32 have an annular shape and are fixedly connected to each other by a bolt 9, so that the case body 2 is a tubular structure as a whole.

Each flow passage flange 32 includes an annular main body portion 36 having a large dimension in an axial direction; and a projection portion 35 that has a smaller dimension in the axial direction than that of the main body portion 36 and projects inward in a radial direction from the main body portion 36. In each flow passage flange 32, a first flow passage 33 is formed so as to extend therethrough in the radial direction. The first flow passage 33 is opened at the inner peripheral side and the outer peripheral side. In the present embodiment, the openings of the first flow passages 33 at the outer peripheral side are connection ports 33a to which a plurality of pipes of the fixing member are connected, respectively. Due to the above, the case body 2 has a configuration in which a plurality of the first flow passages 33 are formed therein. In addition, O-rings 6 are provided between the adjacent flow passage flanges 32, 32 and between the adjacent end flange 30 (31) and flow passage flange 32, respectively.

The shaft body 5 includes a linear shaft main body 10 that is long in an up-down direction; and tubular sleeves 11 that are fitted on the shaft main body 10. It should be noted that in addition to the sleeves 11, annular first sealing rings 15 for forming the later-described mechanical seals 7 are fitted on the shaft main body 10. The sleeves 11 and the first sealing rings 15 are arranged alternately along the axial direction. The number of the provided sleeves 11 is N, and the number of the provided first sealing rings 15 is N+1. A pressing member 14 is fixed to an upper portion of the shaft main body 10 by a bolt 34.

The shaft main body 10 has a large-diameter portion 19 having an increased diameter and provided at the lower side thereof. In addition, N flow passage holes 42 are formed within the shaft main body 10, and these flow passage holes 42 are opened on an outer peripheral surface of the shaft main body 10 and at positions different from each other in the axial direction (up-down direction). The flow passage holes 42 are also opened on an end face of the shaft main body 10, and a plurality of pipes of the rotary member are connected to the openings thereof on the end face, respectively.

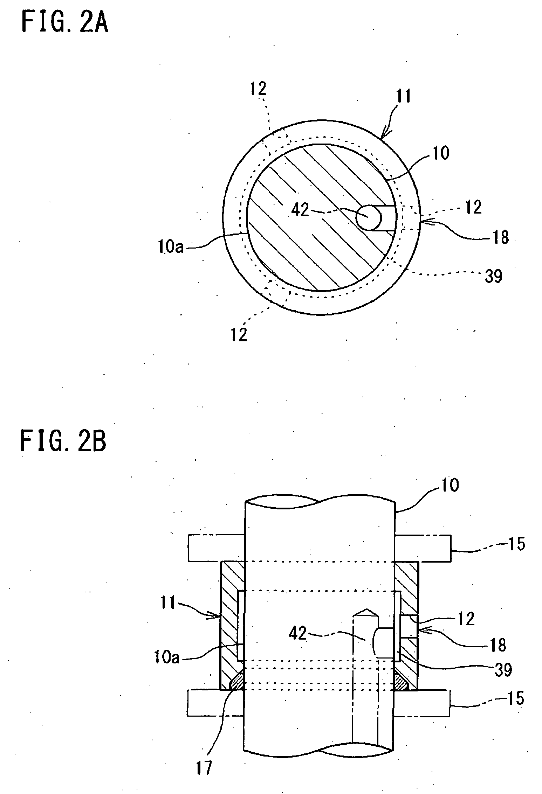

FIGS. 2A and 2B are explanatory diagrams of the sleeve 11 fitted on the shaft main body 10, FIG. 2A is a view as seen from the axial direction (the front), and FIG. 2B is a cross-sectional view as seen from the side. It should be noted that in FIG. 2B, the first sealing rings 15 are shown by two-dot chain line. A plurality of through holes 12 are formed in the sleeve 11 so as to be spaced apart from each other at equal intervals in a circumferential direction, and these through holes 12 are formed at the same position in the axial direction. In the present embodiment, three through holes 12 are formed so as to be spaced apart from each other by 120° in the circumferential direction. These through holes 12 are provided at the center position of the sleeve 11 in the axial direction. It should be noted that the direction in which the through holes 12 extend (the direction of these holes) may be a direction perpendicular to an inner peripheral surface and an outer peripheral surface of the sleeve 11 as shown in FIGS. 2A and 2B, or may be a direction diagonal thereto. In addition, at the radially inner side of the sleeve 11, an annular gap 39 is formed between the sleeve 11 and the outer peripheral surface 10a of the shaft main body 10, and each through hole 12 is connected to the annular gap 39. In addition, the annular gap 39 is connected to the flow passage hole 42 of the shaft main body 10.

One flow passage hole 42 within the shaft main body 10, the annular gap 39 within one sleeve 11, and the plurality of through holes 12 in the sleeve 11 form one second flow passage 18. Furthermore, as shown in FIG. 2B, an O-ring 17 is provided between the shaft main body 10, the sleeve 11, and the first sealing ring 15, thereby preventing the fluid flowing through each second flow passage 18 from entering another flow passage or leaking to the outside. It should be noted that as shown in FIG. 1, two O-rings 17 are provided at an upper portion and a lower portion of the uppermost sleeve 11, respectively.

Due to the above, the shaft body 5 has a configuration in which N second flow passages 18 which are opened at the outer peripheral side thereof are formed therein, and each through hole 12 formed in each sleeve 11 is an opening hole of the second flow passage 18 at the outer peripheral side. In addition, these second flow passages 18 are opened toward the inner peripheral side of the case body 2 and at positions different from each other in the axial direction (up-down direction).

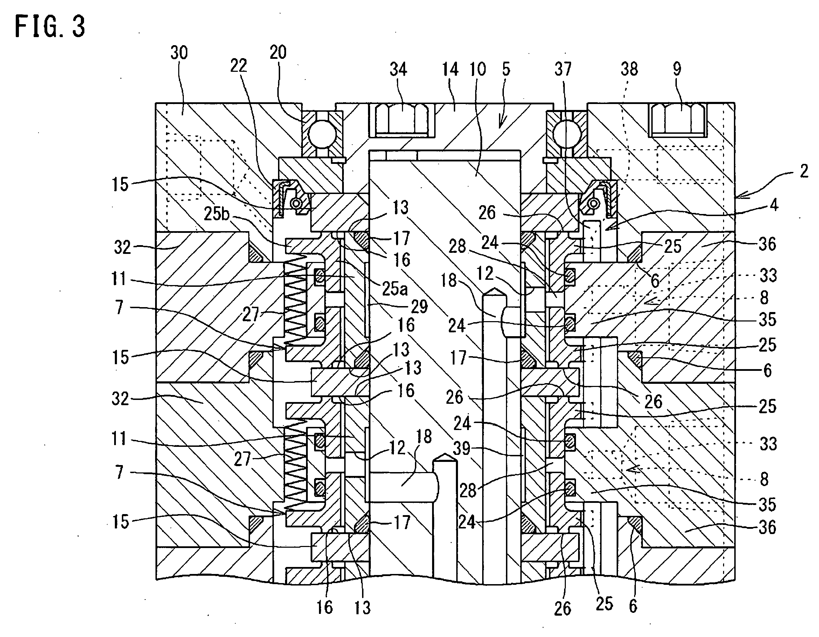

FIG. 3 is a cross-sectional view of a portion (an upper portion) of the joint shown in FIG. 1. Each first sealing ring 15 has annular side faces (annular side faces 16, 16) at both sides thereof in the axial direction. An end face 13 of the sleeve 11 contacts with each annular side face 16, and the sleeve 11 serves as a spacer between the first sealing rings 15, 15. Each of the annular side faces 16, 16 of each first sealing ring 15 is formed as a ring surface along a plane (a horizontal plane) in a state before a pressing force is applied thereto by the later-described pressing member 14.

The pressing member 14 is a bottomed cylindrical member that is fastened to the shaft main body 10 in the axial direction by the bolt 34. By the pressing member 14 being fastened, it is possible to press all the sleeves 11 and first sealing rings 15 toward the large-diameter portion 19 of the shaft main body 10 in the axial direction. It should be noted that the pressing force (the fastening force in the axial direction) by the pressing member 14 is uniform in the circumferential direction. By the pressing force, the end faces 13 of the sleeves 11 are pressed against the annular side faces 16 of the first sealing rings 15. Thus, it is possible to integrate all the sleeves 11 and first sealing rings 15 with the shaft main body 10, so that all the sleeves 11 and first sealing rings 15 are rotatable with the shaft main body 10 due to frictional forces therebetween.

In FIG. 1, a rolling bearing 20 is provided between the pressing member 14 and the end flange 30, and a rolling bearing 21 is provided between the large-diameter portion 19 of the shaft main body 10 and the end flange 31. Thus, the shaft body 5, which includes the sleeves 11 and the shaft main body 10, is rotatable with the first sealing rings 15 relative to the case body 2. In the present embodiment, since the first sealing rings 15 are rotatable with the shaft main body 10, the first sealing rings 15 are rotary rings (rotary-side sealing rings of the mechanical seals 7). Meanwhile, later-described second sealing rings 25 are stationary with the case body 2 and thus are stationary rings (stationary-side sealing rings of the mechanical seals 7).

A seal member (oil seal) 22 is provided between the upper end flange 30 and the uppermost first sealing ring 15, and a seal member (oil seal) 23 is provided between the lower end flange 31 and the lowermost first sealing ring 15. An annular space 4 is formed between the case body 2 and the shaft body 5. In the annular space 4, a sealed space is formed between the seal members 22, 23.

The N mechanical seals 7 are provided in the annular space 4 (sealed space) so as to be aligned along the shaft body 5. Thus, the joint 1 according to the present embodiment is a multi-flow passage rotary joint in which a plurality of mechanical seals 7 are arranged in a serial direction.

Each sleeve 11 and each flow passage flange 32 are arranged so as to face each other across the mechanical seal 7 in the radial direction, and one second flow passage 18 that is opened at the sleeve 11 and one first flow passage 33 that is opened at the inner peripheral side of the flow passage flange 32 are opened at substantially the same position in the axial direction. As shown in FIG. 3, the first flow passage 33 and the second flow passage 18 forms one fluid passage 8, and thus in the annular space 4, the second sealing rings 25, 25 are provided at the radially outer side of each sleeve 11 and between the first sealing rings 15, 15 that are adjacent to each other across the sleeve 11. An annular flow passage (annular space) 28 is formed between these second sealing rings 25, 25 so as to connect the second flow passage 18 (the through holes 12) to the first flow passage 33. These second sealing rings 25, 25 have annular seal surfaces 26, 26 that contact with the annular side faces 16, 16 of the first sealing rings 15, 15 at both sides thereof in the axial direction. Each seal surface 26 is pressed against the annular side face 16 by an elastic force of a later-described elastic member 27, whereby a sealing function of preventing a fluid from leaking from between the annular side face 16 and the seal surface 26 is exerted. In other words, the mechanical seals 7 are configured in which the sealing function is exerted by sliding contact action caused with relative rotation of the seal surfaces 26 of the stationary-side second sealing rings 25 and the annular side faces 16 of the rotary-side first sealing rings 15.

Each second sealing ring 25 is composed of an annular member having an L shape in its cross section, includes a tubular first portion 25a and an annular second portion 25b extending outward in the radial direction from an end portion of the first portion 25a, and the annular seal surface 26 is formed in a portion at the axially outer side of the second portion 25b.

In addition, O-rings 24 are provided between outer peripheral surfaces of the first portions 25a of the second sealing rings 25, 25 and an inner peripheral surface of the projection portion 35 of the flow passage flange 32 to seal therebetween, thereby preventing a fluid from leaking from between these surfaces (the annular flow passage 28). The second sealing rings 25, 25 are fitted and held in a state of being movable in the axial direction relative to the projection portion 35 of the flow passage flange 32 via the O-rings 24.

Each second sealing ring 25 is provided so as to have a gap between the second sealing ring 25 and the outer peripheral surface of the sleeve 11 and is movable in the axial direction. Each mechanical seal 7 includes, in addition to a pair of upper and lower second sealing rings 25, 25, and an elastic member 27 that urges these second sealing rings 25, 25 in such a direction as to separate the second sealing rings 25, 25 from each other in the axial direction. The elastic member 27 according to the present embodiment is composed of a compression coil spring interposed between the pair of upper and lower second sealing rings 25, 25. The elastic member 27 is inserted into a hole formed in the flow passage flange 32 (the projection portion 35), is held by the hole, and is interposed between the second sealing rings 25, 25 (between the second portions 25b, 25b). By the elastic restoring force of the elastic member 27, it is possible to press the seal surfaces 26 of the second portions 25b against the annular side faces 16 of the first sealing rings 15. Thus, each seal surface 26 and each annular side face 16 are allowed to contact with each other in a state of being pressed against each other in the axial direction. As a result, each seal surface 26 slidably contacts with each rotating annular side face 16 to exert the sealing function of each mechanical seal 7, thereby preventing the fluid flowing through the fluid passage 8 from leaking from between the seal surface 26 and the annular side face 16.

Due to the above, the annular flow passage (annular space) 28 which is sealed by the first sealing rings 15, 15 and the second sealing rings 25, 25, which are the components of the mechanical seal 7, and the O-rings 24, 24 is interposed between the first flow passage 33 and the second flow passage 18. The first flow passage 33 and the second flow passage 18 are connected to each other by the annular flow passage 28, and these flow passages 33 and 18 and the annular flow passage 28 form one (independent) fluid passage 8. In the present embodiment, the N fluid passages 8 defined by the respective mechanical seals 7 are formed.

Rotation of each second sealing ring 25 is prevented by the case body 2. For example, a pin 37 is fixed to the flow passage flanges 32 so as to extend in the axial direction, and a claw portion (recess portion) 38 is formed at a portion of each second sealing ring 25 so as to sandwich the pin 37 from both sides thereof in the circumferential direction. The claw portion 38 contacts with the pin 37 from both sides thereof in the circumferential direction, whereby rotation of each second sealing ring 25 is prevented.

Due to the above configuration, the shaft main body 10, the sleeves 11, and the first sealing rings 15 are rotatable together relative to the case body 2, and the seal surfaces 26, 26 of a plurality of the second sealing rings 25, 25 aligned in the axial direction slidably contact with the annular side faces 16, 16 of the rotating first sealing rings 15, 15 at both sides thereof in the axial direction. Thus, the sealing function of each mechanical seal 7 is exerted, and it is possible to form a plurality of the independent fluid passages 8.

In addition, each component included in the joint 1 is preferably inactive with respect to the fluid flowing through each fluid passage 8. For example, in order to prevent metal ions from being eluted into the fluid flowing through each fluid passage 8, each component forming each fluid passage 8 is preferably formed from resin or ceramics. For example, the sleeves 11 are preferably formed from PEEK (polyether ether ketone) or PPS (polyphenylene sulfide), and the second sealing rings 25 are preferably formed from SiC (silicon carbide) or carbon, and the first sealing rings 15 are preferably formed from SiC.

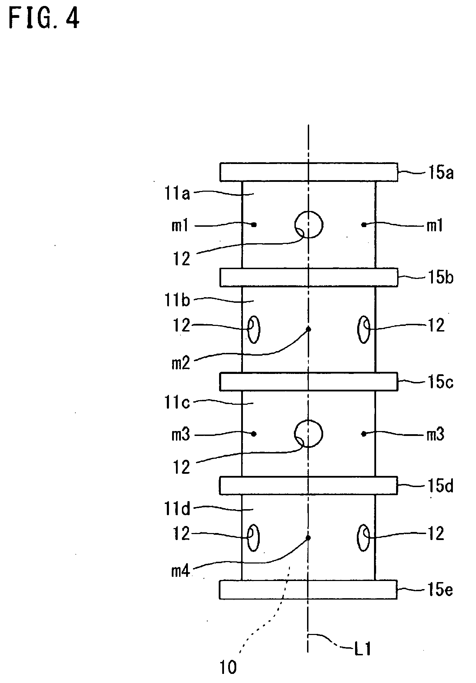

FIG. 4 is an explanatory diagram of a state where the sleeves 11 and the first sealing rings 15 provided alternately on the shaft main body 10 shown in FIG. 1 are taken out. Here, the sleeves 11 are referred to as a first sleeve 11a, a second sleeve 11 b, a third sleeve 11c, and a fourth sleeve 11d in order from above. In addition, the first sealing rings 15 are referred to as a first first sealing ring 15a, a second first sealing ring 15b, a third first sealing ring 15c, a fourth first sealing ring 15d, and a fifth first sealing ring 15e in order from above.

As described above, the pressing force in the axial direction is applied to the sleeves 11a to 11d and the first sealing rings 15a to 15e by the pressing member 14 which is attached by the bolt 34 so as to be non-rotatable relative to the shaft main body 10 (see FIG. 1). Thus, the sleeves 11a to 11d and the first sealing rings 15a to 15e are non-rotatable relative to the shaft main body 10 due to frictional forces between each component.

All the sleeves 11 a to 11d have the same configuration, and as described above (see FIG. 2), the plurality of through holes 12 are formed in each of the sleeves 11a to 11d so as to be spaced apart from each other at equal intervals in the circumferential direction. In the present embodiment, the three through holes 12 are formed so as to be spaced apart from each other at equal intervals in the circumferential direction. Each of the sleeves 11a to 11d is provided between the first sealing rings (15, 15) such that the positions of the through holes 12 in the circumferential direction are predetermined positions. In other words, each of the sleeves 11a to 11d has a limitation on its fitting orientation in the circumferential direction. It should be noted that each of the first sealing rings 15a to 15e does not have such a limitation on its fitting orientation in the circumferential direction.

The fitting orientation of each of the sleeves 11a to 11d in the circumferential direction will be specifically described. As shown in FIG. 4, the sleeves 11a and 11c are provided such that the position (phase) of each through hole 12 of the first sleeve 11a in the circumferential direction coincides with the position (phase) of each through hole 12 of the third sleeve 11c in the circumferential direction. The sleeves 11b and 11d are provided such that the position (phase) of each through hole 12 of the second sleeve 11b in the circumferential direction coincides with the position (phase) of each through hole 12 of the fourth sleeve 11d in the circumferential direction. As described above, each of the sleeves 11a to 11d is provided such that the position of each through hole 12 thereof in the circumferential direction coincides with that of another sleeve away therefrom across one sleeve.

The sleeves 11a and 11b are located such that the position of each through hole 12 of the first sleeve 11a in the circumferential direction and each middle position m2 in the circumferential direction between the through holes 12, 12 adjacent to each other in the circumferential direction in the second sleeve 11b coincide with each other in the circumferential direction. Similarly, the sleeves 11c and 11b are located such that the position of each through hole 12 of the third sleeve 11c in the circumferential direction and each middle position m4 in the circumferential direction between the through holes 12, 12 adjacent to each other in the circumferential direction in the fourth sleeve 11d coincide with each other in the circumferential direction. In other words, a configuration is provided in which the through hole 12 of the first sleeve 11a, the middle position m2 of the second sleeve 11b, the through hole 12 of the third sleeve 11 c, and the middle position m4 of the fourth sleeve 11d are arranged along a straight line L1 in order from above.

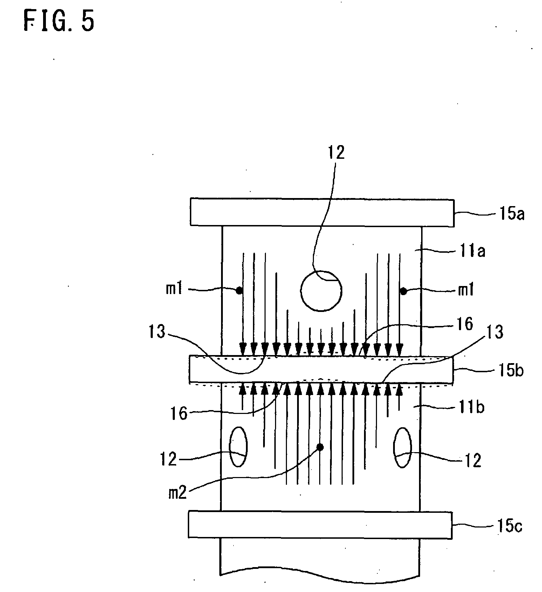

FIG. 5 is an explanatory diagram of the second first sealing ring 15b and the sleeves 11a and 11b at both sides thereof in the axial direction, and arrows in the up-down direction in FIG. 5 indicate contact pressures applied to the annular side faces 16, 16 of the second first sealing ring 15b (received from the sleeves 11a and 11b).

Here, since the three through holes 12 are formed in each sleeve 11 so as to be spaced apart from each other at equal intervals in the circumferential direction, the rigidity of each sleeve 11 with respect to a force in the axial direction varies along the circumferential direction. In other words, the rigidity with respect to a force in the axial direction is relatively low at the position in the circumferential direction at which each through hole 12 is formed, and the rigidity with respect to a force in the axial direction is relatively high at each middle position (m1, m2, m3, m4) in the circumferential direction between the through holes 12, 12 adjacent to each other in the circumferential direction.

Thus, as shown in FIG. 5, when the sleeve 11a (11b) is pressed against the annular side face 16 of the first sealing ring 15b in the axial direction by the pressing member 14 (see FIG. 1), a contact pressure applied to the annular side face 16 periodically varies. It should be noted that the variation of such a contact pressure appears more significantly in the case with a member having a relatively low Young's modulus such as resin than in the case with a metal material such as stainless steel.

In other words, when focusing on the sleeve 11a at the upper side of the first sealing ring 15b, a contact pressure generated by the end face 13 of the sleeve 11a contacting with the upper annular side face 16 of the first sealing ring 15b becomes minimum at the same position in the circumferential direction as the position in the circumferential direction at which each through hole 12 of the sleeve 11a is formed, and becomes maximum at the same position in the circumferential direction as each middle position m1 in the circumferential direction between the through holes 12, 12 adjacent to each other in the circumferential direction in the sleeve 11a.

In contrast, when focusing on the sleeve 11b at the lower side of the first sealing ring 15b, a contact pressure generated by the end face 13 of the sleeve 11b contacting with the lower annular side face 16 of the first sealing ring 15b becomes minimum at the same position in the circumferential direction as the position in the circumferential direction at which each through hole 12 of the sleeve 11b is formed, and becomes maximum at the same position in the circumferential direction as each middle position m2 in the circumferential direction between the through holes 12, 12 adjacent to each other in the circumferential direction in the sleeve 11b.

Therefore, when the sleeves 11a and 11b are located such that the position of each through hole 12 of the sleeve 11a at one side among the sleeves 11a and 11b at both sides of the second first sealing ring 15b in the axial direction and each middle position m2 in the circumferential direction between the through holes 12, 12 adjacent to each other in the circumferential direction in the sleeve 11b at the other side thereamong coincide with each other in the circumferential direction as described above, the position in the circumferential direction at which the contact pressure applied to the upper annular side face 16 of the second first sealing ring 15b becomes minimum coincides with the position in the circumferential direction at which the contact pressure applied to the lower annular side face 16 of the second first sealing ring 15b becomes maximum.

Thus, the upper and lower contact pressures applied to the second first sealing ring 15b from both sides thereof in the axial direction do not counterbalance each other, so that the first sealing ring 15b becomes deformed (distorted) such that a portion thereof is downwardly convex and another portion thereof is upwardly convex. In other words, the first sealing ring 15b becomes slightly deformed so as to wave along the circumferential direction (causes slight distortion). The deformed second first sealing ring 15b is shown by broken lines in FIG. 5.

As a result, minute gaps occur between the annular side faces 16, 16 of the second first sealing ring 15b and the seal surfaces 26, 26 of the second sealing rings 25, 25 (see FIG. 3) at both sides thereof in the axial direction. Thus, a fluid that can contribute to lubrication enters each gap to form a lubricating film, whereby it is possible to reduce sliding friction between the second first sealing ring 15b and the second sealing rings 25, 25. By the lubricating film, it is possible to reduce wear of sliding surfaces (the seal surfaces 26, the annular side faces 16).

Therefore, according to the present embodiment, it is possible to prevent corotation of the first sealing rings and the second sealing rings which may occur in the conventional art (see FIG. 9), and thus it is possible to prevent the claw portion 38 (see FIG. 3) or the like for preventing rotation of the second sealing ring 25, from being damaged. In addition, it is possible to prevent rotation of the second first sealing ring 15b from being suppressed by the second sealing ring 25, it is possible to prevent sliding between the second first sealing ring 15b and the sleeves 11a and 11b and between the second first sealing ring 15b and the O-ring 17 (see FIG. 3), and thus it is possible to prevent wear of the end faces 13 of the sleeves 11a and 11b and damage of the O-ring 17. As a result, it is possible to maintain stable sealing performance in the joint 1 over a long period of time.

In addition, the relationship between each of the other first sealing rings 15c, 15d and the sleeves 11, 11 at both sides thereof in the axial direction is the same as in the case of the second first sealing ring 15b.

Specifically, as shown in FIG. 4, the sleeves 11b and 11c are located such that the position of each through hole 12 of the sleeve 11b at one side among the sleeves 11b and 11c at both sides of the third first sealing ring 15c in the axial direction and each middle position m3 in the circumferential direction between the through holes 12, 12 adjacent to each other in the circumferential direction in the sleeve 11c at the other side thereamong coincide with each other in the circumferential direction. Thus, the position in the circumferential direction at which a contact pressure applied to the upper annular side face 16 of the third first sealing ring 15c becomes minimum coincides with the position in the circumferential direction at which a contact pressure applied to the lower annular side face 16 of the third first sealing ring 15c becomes maximum. Therefore, the third first sealing ring 15c becomes slightly deformed so as to wave along the circumferential direction, and thus.it is possible to reduce sliding friction between the third first sealing ring 15c and the second sealing rings 25, 25.

In addition, the sleeves 11c and 11d are located such that the position of each through hole 12 of the sleeve 11c at one side among the sleeves 11c and 11d at both sides of the fourth first sealing ring 15d in the axial direction and each middle position m4 in the circumferential direction between the through holes 12, 12 adjacent to each other in the circumferential direction in the sleeve 11d at the other side thereamong coincide with each other in the circumferential direction. Thus, the position in the circumferential direction at which a contact pressure applied to the upper annular side face 16 of the fourth first sealing ring 15d becomes minimum coincides with the position in the circumferential direction at which a contact pressure applied to the lower annular side face 16 of the fourth first sealing ring 15d becomes maximum. Therefore, the fourth first sealing ring 15d becomes slightly deformed so as to wave along the circumferential direction, and thus it is possible to reduce sliding friction between the fourth first sealing ring 15d and the second sealing rings 25, 25.

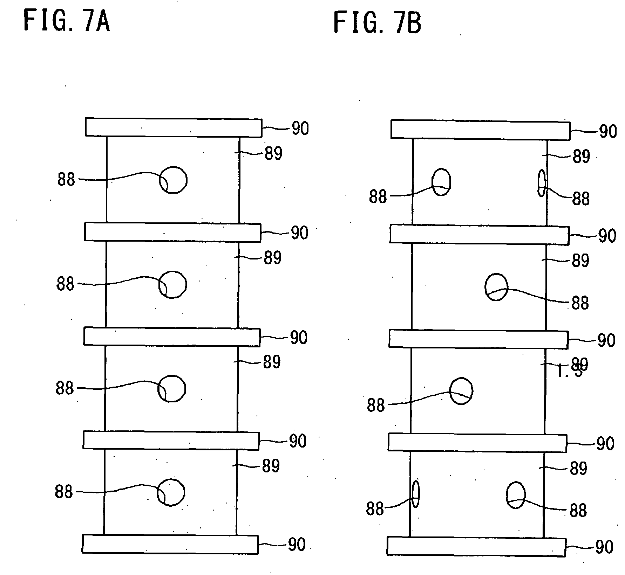

Here, FIGS. 7A and 7B are explanatory diagrams illustrating a conventional example, FIG. 7A shows the case where the positions of respective through holes 88 of all sleeves 89 in the circumferential direction are the same, and FIG. 7B shows the case where the positions of the through holes 88 of the sleeves 89 in the circumferential direction have no regularity and are random.

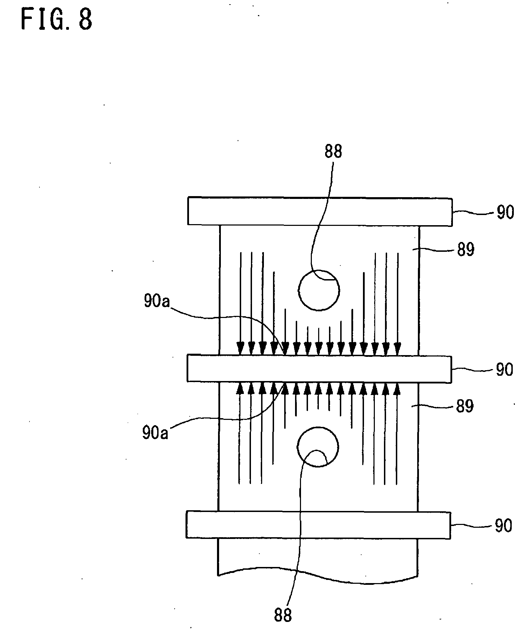

FIG. 8 is an explanatory diagram in the case of FIG. 7A, and arrows in the up-down direction in FIG. 8 indicate a contact pressure applied to each annular side face 90a of a first sealing ring 90. In the case of FIG. 7A, the position in the circumferential direction at which the contact pressure applied to the upper annular side face 90a of the first sealing ring 90 becomes maximum coincides with the position in the circumferential direction at which the contact pressure applied to the lower annular side face 90a of the first sealing ring 90 becomes maximum. In addition, the positions in the circumferential direction at which the contact pressures become minimum also coincide with each other. In this case, the upper and lower contact pressures applied to the first sealing ring 90 from both sides thereof in the axial direction counterbalance and cancel each other, so that wavy deformation does not occur in the first sealing ring 90.

In addition, in the case of FIG. 7B as well, portions where the upper and lower contact pressures applied to the first sealing ring 90 from both sides thereof in the axial direction counterbalance each other and portions where the upper and lower contact pressures do not counterbalance each other occur randomly, wavy deformation is less likely to occur in the first sealing ring 90, and further there is the concern of causing an adverse effect of making the sealing performance of each mechanical seal 7 unstable.

As a result, in each of the cases of FIGS. 7A and 7B, gaps are less likely to occur between the annular side faces 90a, 90a of the first sealing ring 90 and seal surfaces 92a, 92a of the second sealing rings 92, 92 at both sides thereof in the axial direction (see FIG. 9), and a fluid that can contribute to lubrication cannot enter therebetween. Thus, sliding friction between the first sealing ring 90 and the second sealing rings 92, 92 is increased.

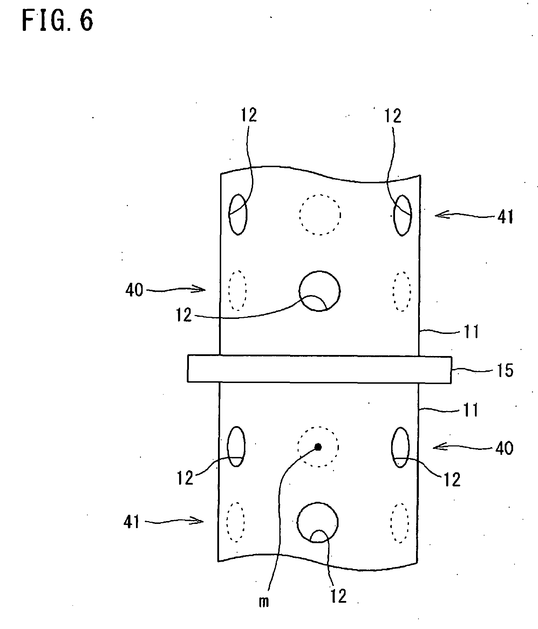

It should be noted that as another embodiment (see FIG. 6), a plurality of through holes 12 formed so as to be spaced apart from each other at equal intervals in the circumferential direction are defined as one through hole row, and a plurality of (two in the illustrated example) through hole rows 40, 41 in the axial direction are provided in each sleeve 11. In this case, focusing on the through hole rows 40, 40 that are closest to the first sealing ring 15, a configuration is provided in which the position of each through hole 12 of the sleeve 11 at one side and each middle position m in the circumferential direction between the through holes 12, 12 adjacent to each other in the circumferential direction in the sleeve 11 at the other side coincide with each other in the circumferential direction as described above.

In addition, by changing the size (diameter) of each through hole 12 formed in each sleeve 11 or the number of the through holes 12 formed in each sleeve 11, it is possible to adjust the rigidity of each sleeve 11. Thus, it is possible to cause distortion (concave and convex corrugation, swell) having a desired size in the first sealing ring 15. It should be noted that by changing the size of each through hole 12, it is also possible to change the flow rate of the fluid flowing through each fluid passage 8.

In addition, the multi-port rotary joint 1 according to the present invention is not limited to the illustrated form and may be in another form within the scope of the present invention. For example, in the above-described embodiment, N = 4 (each of the numbers of the sleeves 11 and the mechanical seals 7 is "4"), but these numbers are changeable as appropriate in accordance with the number of the fluid passages 8. Moreover, the number of the through holes 12 formed in one sleeve 11 is "3", but may be another number. It should be noted that in all the sleeves 11 interposed between the first sealing rings 15, the through holes 12 need to be formed so as to be spaced apart from each other at equal intervals in the circumferential direction and preferably have the same shape.

In addition, the case has been described in which the multi-port rotary joint 1 is used in a semiconductor manufacturing apparatus (a CMP apparatus), but the multi-port rotary joint 1 may be used in an apparatus other than this apparatus.

## Claims

1. A multi-port rotary joint (1) comprising:
a tubular case body (2) having a plurality of first flow passages (33) formed therein so as to be opened at an inner peripheral side thereof;
a shaft body (5) provided within the case body so as to be rotatable relative to the case body (2) and having a plurality of second flow passages (18) formed therein so as to be opened at an outer peripheral side thereof; and
a plurality of mechanical seals (7) provided in a space between the case body and the shaft body and along the shaft body, wherein
the shaft body includes a shaft main body (10) and a plurality of sleeves (11) fitted on the shaft main body and each sleeve (11) having a plurality of through holes (12) formed therein so as to be spaced apart from each other at equal intervals in a circumferential direction,
each mechanical seal includes first sealing rings (15) fitted on the shaft main body (10) alternately with the sleeves (11) and having annular side faces that contact with end faces of the sleeves, and second sealing rings provided at a radially outer side of the sleeve and between the first sealing rings adjacent to each other across the sleeve and having annular seal surfaces that contact with the annular side faces of the respective first sealing rings,
the sleeves (11) and the first sealing rings (15) are configured to be rotatable with the shaft main body (10) by being pressed in an axial direction, and
the sleeves (11) at both sides of the first sealing ring (15) in the axial direction are located such that a position of each through hole (12) of the sleeve at one side among the sleeves at both sides of the first sealing ring in the axial direction and a middle position in the circumferential direction between the through holes (12) adjacent to each other in the circumferential direction in the sleeve at another side thereamong coincide with each other in the circumferential direction.

2. The multi-port rotary joint (1) according to claim 1, wherein each of the plurality of sleeves (11) is provided such that a position of each through hole (12) thereof in the circumferential direction coincides with that of another sleeve (11) away therefrom across one sleeve.

## Patentansprüche

1. Multiportdrehverbindung (1), umfassend:
einen rohrförmigen Gehäusekörper (2) mit mehreren darin ausgebildeten ersten Strömungsdurchgängen (33), die an einer inneren peripheren Seite davon geöffnet werden können;
einen innerhalb des Gehäusekörpers vorgesehenen Wellenkörper (5), der im Verhältnis zum Gehäusekörper (2) drehbar und mit mehreren darin ausgebildeten zweiten Strömungsdurchgängen (18) ausgestattet ist, die an einer äußeren peripheren Seite davon geöffnet werden können; und
mehrere Gleitringdichtungen (7), die in einem Raum zwischen dem Gehäusekörper und dem Wellenkörper und entlang dem Wellenkörper vorgesehen sind, wobei
der Wellenkörper einen Wellenhauptkörper (10) und mehrere am Wellenhauptkörper montierte Hülsen (11) beinhaltet, wobei jede Hülse (11) mehrere darin ausgebildete Durchgangslöcher (12) aufweist, die voneinander in regelmäßigen Abständen in einer Umfangsrichtung beabstandet sind,
wobei jede Gleitringdichtung erste Dichtungsringe (15), die am Wellenhauptkörper (10) abwechselnd mit den Hülsen (11) montiert sind und ringförmige Seitenflächen haben, die in Kontakt mit Endflächen der Hülsen stehen, sowie zweite Dichtungsringe beinhalten, die an einer radial äußeren Seite der Hülse und zwischen den ersten Dichtungsringen angrenzend aneinander quer zur Hülse vorgesehen sind und ringförmige Dichtungsflächen haben, die in Kontakt mit den ringförmigen Seitenflächen der jeweiligen ersten Dichtungsringe stehen,
wobei die Hülsen (11) und die ersten Dichtungsringe (15) so konfiguriert sind, dass sie mit dem Wellenhauptkörper (10) durch Druckausübung in einer axialen Richtung drehbar sind, und
wobei die Hülsen (11) an beiden Seiten des ersten Dichtungsrings (15) in der axialen Richtung so angeordnet sind, dass eine Position eines jeden Durchgangslochs (12) der Hülse an einer Seite unter den Hülsen an beiden Seiten des ersten Dichtungsrings in der axialen Richtung mit einer mittleren Position in der Umfangsrichtung zwischen den Durchgangslöchern (12) angrenzend aneinander in der Umfangsrichtung in der Hülse an einer anderen Seite davon in der Umfangsrichtung zusammenfällt.

2. Multiportdrehverbindung (1) nach Anspruch 1, bei der jede der mehreren Hülsen (11) so angeordnet ist, dass eine Position eines jeden Durchgangslochs (12) davon in der Umfangsrichtung mit derjenigen einer anderen Hülse (11) zusammenfällt, die davon quer zu einer Hülse entfernt ist.

## Revendications

1. Joint rotatif à orifices multiples (1), comprenant:
un corps d'enceinte tubulaire (2) comportant une pluralité de premiers passages d'écoulement (33) formés dans celui-ci de manière à être ouverts à un côté périphérique intérieur de celui-ci;
un corps d'arbre (5) prévu à l'intérieur du corps d'enceinte de manière à pouvoir tourner par rapport au corps d'enceinte (2) et comportant une pluralité de deuxièmes passages d'écoulement (18) formés dans celui-ci de manière à être ouverts à un côté périphérique extérieur de celui-ci; et
une pluralité de joints mécaniques (7) prévus dans un espace entre le corps d'enceinte et le corps d'arbre et le long du corps d'arbre, dans lequel
le corps d'arbre comprend un corps d'arbre principal (10) et une pluralité de manchons (11) agencés sur le corps d'arbre principal, chaque manchon (11) comportant une pluralité de trous traversants (12) formés dans celui-ci de manière à être espacés les uns des autres à des intervalles égaux dans une direction circonférentielle,
chaque joint mécanique comprend des premiers anneaux d'étanchéité (15) agencés sur le corps d'arbre principal (10) alternativement avec les manchons (11) et présentant des faces latérales annulaires qui sont en contact avec des faces d'extrémité des manchons, et des deuxièmes anneaux d'étanchéité prévus à un côté radialement extérieur du manchon et entre les premiers anneaux d'étanchéité adjacents les uns aux autres à travers le manchon et présentant des surfaces d'étanchéité annulaires qui sont en contact avec les faces latérales annulaires des premiers anneaux d'étanchéité respectifs,
les manchons (11) et les premiers anneaux d'étanchéité (15) sont configurés de manière à pouvoir tourner avec le corps d'arbre principal (10) en étant pressés dans une direction axiale, et
les manchons (11) des deux côtés du premier anneau d'étanchéité (15) dans la direction axiale sont disposés de telle sorte qu'une position de chaque trou traversant (12) du manchon d'un premier côté parmi les manchons des deux côtés du premier anneau d'étanchéité dans la direction axiale et une position intermédiaire dans la direction circonférentielle entre les trous traversants (12) adjacents les uns aux autres dans la direction circonférentielle dans le manchon d'un autre côté parmi ceux-ci coïncident l'une avec l'autre dans la direction circonférentielle.

2. Joint rotatif à orifices multiples (1) selon la revendication 1, dans lequel chacun de la pluralité de manchons (11) est prévu de telle sorte qu'une position de chaque trou traversant (12) de ceux-ci dans la direction circonférentielle coïncide avec celle d'un autre manchon (11) distant de celui-ci à travers un premier manchon.
